(19) Europäisches Patentamt
European Patent Office
Office européen des brevets

(11) Publication number: **0 239 890**
**A2**

(12) # EUROPEAN PATENT APPLICATION

(21) Application number: **87104131.5**

(22) Date of filing: **20.03.87**

(51) Int. Cl.[4]: **C09J 3/14**, C08F 222/00, C09D 3/80

(30) Priority: **25.03.86 US 843946**
**21.11.86 US 933442**

(43) Date of publication of application:
**07.10.87 Bulletin 87/41**

(84) Designated Contracting States:
**CH DE GB LI**

(71) Applicant: **National Starch and Chemical Corporation**
**10 Finderne Avenue Box 6500**
**Bridgewater New Jersey 08807(US)**

(72) Inventor: **Blomquist, Robert M.**
**125 Dehart Place**
**Elizabeth New Jersey 07202(US)**

(74) Representative: **Hagemann, Heinrich, Dr. et al**
**Patentanwälte GEYER, HAGEMANN & PARTNER Postfach 860329**
**D-8000 München 86(DE)**

(54) **Opaque cyanoacrylate adhesives and coatings.**

(57) An opaque cyanoacrylate adhesive or coating composition comprises a monomeric ester of 2-cyanoacrylic acid and 5 to 50% by weight, based on the monomeric ester, of a semi-compatible plasticizer, i.e., a plasticizer which is fully compatible with the cyanoacrylate monomer but incompatible with the cyanoacrylate polymer. Plasticizers useful as opacifiers are selected from the group consisting of a non-hydrogen bonding solvent or a moderately hydrogen bonding solvent which has a boiling point of 93°C or above. When the composition is based on ethyl cyanoacrylate, a non-hydrogen bonding solvent with a solubility parameter of about 7.4 and below 8.9 is satisfactory, whereas a moderately hydrogen bonding solvent should have a solubility parameter of 7.4 to less than 8.5. When the composition is based on methyl cyanoacrylate, the solubility parameters are above 7.8 to below 11.1 for the non-hydrogen bonding solvent and 7.4 to less than 9.6 for the hydrogen bonding solvent. Typical plasticizers are a partially hydrogenated terphenyl (8.7) or triethylene glycol di-2-ethylhexanoate (8.5).

EP 0 239 890 A2

Xerox Copy Centre

## OPAQUE CYANOACRYLATE ADHESIVES AND COATINGS

The present invention is directed to cyanoacrylate adhesives and coatings which are rendered opaque after cure by the inclusion therein of selected semicompatible plasticizers.

Cyanoacrylates are typically clear, high shear strength adhesives that are capable of forming "instant" bonds to a wide variety of surfaces. The clarity of these material produces a bondline that has a non-objectionable cosmetic appearance and is, therefore, highly suited to most applications. However, in certain instances, there is a need for a material that produces an opaque bondline. This allows greater visibility of the bondline for inspection purposes. In addition, opaque colored cyanoacrylates will allow for an improved cosmetic appearance or an even easier identification on certain substrates.

Cyanoacrylates are also capable of forming clear, tough, plastic coatings. These coatings can be used to provide gloss, scratch resistance, chemical resistance, electrical resistance, and improved structural performance. When dryed, these materials can provide improved visibility for the color coding of difficult to mark surfaces. However, such coatings on black or darkly colored surfaces, have poor visibility because of their transparency. For example, if a black piece of rubber is coated with a conventional dyed cyanoacrylate, it is extremely difficult to determine the color with which the rubber was coded. Opaque cyanoacrylates, because of their whitening effect, allow the coating to be seen and the colors of the dyes are plainly visible on black surface.

In order to make most materials opaque, white pigments such as titanium dioxide or calcium carbonate are added. Such materials are however, strong activators for cyanoacrylates and result in an adhesive with an unacceptable shelf-life.

Plasticizers have been used in cyanoacrylate formulations for quite some time. See, for example, U.S. 2,784,127 issued March 5, 1957 to F. E. Joyner et al.; 3,354,128 issued November 21, 1967 to T. H. Wicker; 3,961,966 issued June 8, 1976 to B. Brinkmann et al.; and 3,699,127 issued October 17, 1972 to D. J. O'Sullivan. They are used to make a brittle cyanoacrylate somewhat more flexible. In order to obtain maximum flexibility in the adhesive bond, a plasticizer that is highly compatible with the cyanoacrylate polymer is used.

The present invention provides a method for opacifying a cyanoacrylate composition, which comprises the step of adding to at least one monomeric 2-cyanoacrylate an effective amount of semi-compatible plasticizer, the plasticizer being a solvent having a boiling point of 93°C (200°F) or above and selected from the group consisting of a non-hydrogen bonding solvent or a moderately hydrogen-bonding solvent, the solvent being soluble in the monomeric 2-cyanoacrylate and insoluble in the polymerized 2-cyanoacrylate. Typically 5 to 50% by weight, based on the monomeric ester, of the plasticizer is used. The preferred amount of plasticizer is 20-30% by weight. The mixture of the semi-compatible plasticizer with the liquid adhesive or coating is a clear solution which, when used as an adhesive, turns opaque because the plasticizer becomes incompatible as the cyanoacrylate monomer polymerizes.

In some cases, uncontrollable whitening occurs outside of the cyanoacrylate bond line. This is referred to as chlorosis. CHLB is undesirable and a number of patents are directed to methods for avoiding or reducing such whitening. See, e.g., Japan. Kokai 55/94979 of July 18, 1980; 55/23113 of Feb. 19, 1980; 54/152033 of Nov. 29, 1979; 53/106734 of Sept. 18, 1978; 53/880043 of Aug. 3, 1978; 53/81538 of July 19, 1978; 52/137440 of Nov. 16, 1977; and 52/68234 of June 6, 1977. In contrast to the non-reproducible whitening caused by such chlorosis, which is sensitive to temperature, humidity, air flow, and substrate surface, the present composition produces reproducible whitening of the bond line once the adhesive cures regardless of the above conditions.

The selection of suitable plasticizers for use herein is based on the solubility parameter of the plasticizer, and, of course, the boiling point of the solvent used as the plasticizer which should be at least 93°C (200°F) for most adhesive applications. Solubility parameters are a measure of the cohesive energy density of a molecule. Molecules with the same solubility parameters will be fully compatible. In order to determine the solubility parameter ranges suitable for a useful opacifying plasticizer, model compounds with known solubility parameters are utilized.

The solubility parameters of a large number of low boiling solvents are measured directly from the determination of their latent heat of vaporization. When these solvents are listed in ascending order of solubility parameter, one obtains a solvent spectrum. Typically, this spectrum is divided into three separate spectra, one for non-hydrogen bonding solvents, one for moderately hydrogen bonding solvents, and one for strongly hydrogen bonding solvents. The following chart shows how these solvents are classified.

| Non-Hydrogen Bonding | Moderately Hydrogen Bonding | Strongly Hydrogen Bonding |
|---|---|---|
| Hydrocarbons | Ethers | Alcohols |
| Halogenated Hydrocarbons | Ketones | Carboxylic Acids |
| Nitro Hydrocarbons | Esters | Amines |
| | | Water |

Strongly hydrogen bonding solvents adversely affect the storage stability and properties of the cyanoacrylates, and hence they are not suitable for use as opacifiers. For non-hydrogen bonding solvents, the solubility parameter should be above 7.4 and below 11.1, typically 7.8 to 8.7 for use with ethyl cyanoacrylate and 8.2 to 10.6 for use with methyl cyanoacrylate. Suitable low boiling solvents include methyl cyclohexane (7.8), cyclohexane (8.2), and p-ethyl toluene (8.7) for ethyl cyanoacrylate. For moderately hydrogen bonding solvents, the solubility parameter should be 7.4 to less than 9.6, typically 7.4 to 8.4 for use with ethyl cyanoacrylate and 7.4 to 9.1 for use with methyl cyanoacrylate. Suitable low boiling solvents include diethyl ether (7.4) for ethyl cyanoacrylate as well as n-butyl acetate (8.5) and ethyl acetate (9.1) for methyl cyanoacrylate. The indicated low boiling solvents will provide opacity when the monomer polymerizes but will be unsatisfactory for use at high temperatures. However, because compounds with the same solubility parameter possess the same solubility characteristics, high boiling plasticizers within the solubility parameter ranges listed above will provide opacity and be satisfactory for use at elevated temperatures.

Suitable moderately hydrogen bonding plasticizers having a solubility parameter within the same range, which would therefore be useful for ethyl cyanoacrylate, include butyl stearate (7.4), dibutyoxyethyl phthalate (8.0), tributyl phosphate (8.2), 2-ethylhexyl diphenyl phosphate (8.4), and dioctyl azelate (8.4). Suitable moderately hydrogen bonding plasticizers having a solubility parameter within the range suitable for methyl cyanoacrylate include butyl stearate (7,5), dibutoxy ethyl phthalate (8.0), tributyl phosphate (8.2), 2-ethylhexyl diphenyl phosphate (8.4), dioctyl azelate (8.4), dioctyl phthalate (8.7), dibutyl phenyl phosphate (8.7), dioctyl adipate (8.7), dihexyl phthalate (8.9), tricresyl phosphate (9.0), dibutyl sebacate (9.2), and triphenyl phosphate (9.2). The solubility parameters of the above plasticizers are reported in Plasticizer Technology, Vol. I, p. 188, edited by P. F. Bruins and published by Rheinhold Publishing Corp. (New York 1965).

A non-hydrogen bonding solvent having a solubility parameter within the range suitable for both ethyl and methylcyanoacrylate is a partially hydrogenated terphenyl compound (8.7) available from Monsanto Co. as HB-40®.

The α-cyanoacrylate monomers used herein are compounds of the formula:

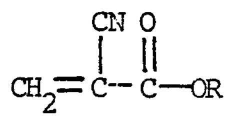

wherein R represents an alkyl group (which may be substituted with a substituent such as halogen atom or an alkoxy group), an alkenyl group, an alkynyl group, a cycloalkyl group, an aralkyl group, or an aryl group. Specific examples of suitable R groups are methyl, ethyl, n-propyl isopropyl, n-butyl, isobutyl, pentyl, hexyl, heptyl, octyl, n-decyl, undecyl, dodecyl, cetyl, vinyl, allyl, methallyl, crotyl, propargyl, cyclohexyl, benzyl, phenyl, cresyl, trifluorethyl, 2-methyoxyethyl, 2-methoxyisopropyl, 2-ethoxyethyl, 2-chloroethyl, 2-fluoroethyl, hexafluorisobutyl, 2-cyahoethyl, and like groups.

The preferred cyanoacrylates are the methyl and ethyl cyanoacrylates. The monomeric esters of 2-cyanoacrylic acid can be prepared by methods known in the art, such as those described in U.S. Patent Nos. 2,467,927 issued April 19, 1949 to A. E. Ardis and 3,254,111 issued May 31, 1966 to G. F. Hawkins et al.

The adhesive or coating compositions herein may contain various additives including stabilizers, thixotropic agents, crosslinking agents, and coloring materials.

Suitable stabilizers include antioxidants or radical polymerization inhibitors such as sulfur dioxide, sulfonic acids, sultones, boron fluorides, hydroquinone, hydroquinone monomethyl ether, catechol, and pyrogallol. Although they can be added in varying amounts, the amount is generally about 0.0001 to 5% by weight based on the cyanoacrylate. Suitable thixotropic agents include chemically treated Cabosil (i.e., fumed silica).

Polymers which are miscible with cyanoacrylates, such as poly(methylmethacrylate), poly-(α-cyanoacrylate) and acrylic rubber, can be used as thickeners. Although the amount added can be varied widely, it is generally about 0.1 to 50% by weight based on the cyanoacrylate.

Plasticizers such as dioctyl phthalate, sebacic acid ester, or phosphoric acid ester should not be needed herein since the opacifying agents also function as plasticizers. If additional plasticizers are needed, they may, however, be used.

Crosslinking agents play a role in improving the resistance of a bonded film by changing a linear cyanoacrylate to a three dimensional network. Suitable crosslinking agents include multifunctional compounds such as alkylene diacrylate, alkylene dimethacrylate, trimethylolpropanetriacrylate, and triallylisocyanurate.

Although coloring materials are not required herein, they may be used to give opaque colored adhesives. Ordinary oil soluble dyes and coloring matters are used.

Other additives, conventional within the cyanoacrylate formulation art, may be included in the compositions herein without departing from the teaching thereof, provided they do not adversely affect the opacity. Examples of such additives may be found e.g., in U.S. Pat. Nos. 4,170,585 issued Oct. 9, 1979 to A. Motegi et al.; 4,450,265 issued May 22, 1984 to S. J. Harris, and 4,532,293 issued July 30, 1985 to T. Ikeda et al.

In the Examples which follow, all parts are by weight and all temperatures are in degrees Celsius unless otherwise specified. Lap shear strength was tested by ASTM Procedure D1002-72 (1978). Set times were determined to within 5 sec. range by placing 5μ l of adhesive between the clean surfaces of the indicated substrates and testing until hand pull strength was observed.

## Example I

This example determines which non-hydrogen bonding solvents and moderately hydrogen bonding solvents will be incompatible and indicates the solubility parameter range for compatible plasticizers.

Unthickened ethyl cyanoacrylate and methyl cyanoacrylate adhesives were diluted with 30% of the indicated solvent and examined for compatibility. The opacity of the compatible adhesive-solvent mixtures was then determined by placing a drop of the mixture onto a piece of black rubber that had been treated with a commercial cyanoacrylate accelerator (Permabond QFS available from National Starch and Chemical Corp.). After 1 hour, the material was visually inspected and considered opaque if the cured adhesive was significantly whiter than the cured cyanoacrylate which contained no solvent. The results are shown in Tables #1 and #2.

TABLE I - Non-Hydrogen Bonding Solvents

| Solvent | Solubility Parameter | Soluble in Ethyl Cyano-acrylate | Soluble in Methyl Cyano-acrylate | Opaque in Ethyl Cyano-acrylate | Opaque in Methyl Cyano-acrylate |
|---|---|---|---|---|---|
| Pentane* | 7.0 | No | No | - | - |
| Heptane* | 7.4 | No | No | - | - |
| Methyl Cyclohexane** | 7.8 | Yes | No | Yes | - |
| Cyclohexane* | 8.2 | Yes | Yes | Yes | Yes |
| p-Ethyl Toluene** | 8.7 | Yes | Yes | Yes | Yes |
| Toluene* | 8.9 | Yes | Yes | No | Yes |
| di-Chlorobenzene* | 10.0 | Yes | Yes | No | Yes |
| Bromonaphthalene* | 10.6 | Yes | Yes | No | Yes |
| Nitroethane* | 11.1 | Yes | Yes | No | No |
| Nitromethane* | 12.7 | Yes | Yes | No | No |

*Solubility parameter values from H. Burrell, Official Digest 726-758, Oct. 1955.
**Solubility Parameter value from K. L. Hoy et al., "Tables of Solubility Parameter", Union Carbide Corp., 5-16-75.

TABLE II - Moderately Hydrogen Bonding Solvents

| Solvent | Solubility Parameter | Soluble in Ethyl Cyano-acrylate | Soluble in Methyl Cyano-acrylate | Opaque in Ethyl Cyano-acrylate | Opaque in Methyl Cyano-acrylate |
|---|---|---|---|---|---|
| Diethyl ether* | 7.4 | Yes | Yes | Yes | Yes |
| Dioctyl azelate** | 8.4 | Yes | Yes | Yes | Yes |
| n-Butyl acetate* | 8.5 | Yes | Yes | No | Yes |
| Dioctyl phthalate* | 8.7 | Yes | Yes | No | Yes |
| Ethyl acetate* | 9.1 | Yes | Yes | No | Yes |
| Acetone* | 9.6 | Yes | Yes | No | No |
| di-Butyl phthalate* | 9.9 | Yes | Yes | No | No |
| di-Methyl phthalate* | 10.7 | Yes | Yes | No | No |
| Propylene carbonate* | 13.3 | Yes | Yes | No | No |
| Ethylene carbonate* | 14.7 | Yes | Yes | No | No |

*Solubility parameter from H. Burrell, Official Digest 726-758, Oct. 1955.
**Solubility parameter calculated as described by P. S. Small, J. Appl. Chem. 3, p. 75, 1953.

The results show that the following solubility parameter criteria must be met for the material to act as an opacifier:

Ethyl Cyanoacrylate -The solubility parameter must be >7.4 and <8.9, preferably 7.8-8.7, when a non-hydrogen bonding solvent is used as the opacifier and <8.5, preferably about 7.4-8.4, when the moderately hydrogen bonding solvent is used as the opacifier.

Methyl Cyanoacrylate -The solubility parameter must be >7.8 and <11.1, preferably 8.2-10, when a non-hydrogen bonding solvent is used as the opacifier and <9.6, preferably 7.4-9.1, when a moderate hydrogen bonding solvent is used as the opacifier.

## Example II

This example shows that a high boiling solvent which falls within the indicated solubility parameter range provided an opaque cured adhesive with satisfactory adhesive properties. The stabilized adhesive composition contained 80% of an unthickened ethyl cyanoacrylate and 20% of a partially hydrogenated terphenyl compound having a solubility parameter of 8.7 (determined by the above procedure). The solvent, which is available from Monsanto Co. as HB-40®, is a high-boiling aromatic (180°C at 10 mm. Hg) which solvates a variety of polymers, rubbers, asphalts, and tars. It is a clear oily liquid pratically insoluble in water having density of about 8.4 lbs./gal. at 25°C, pour point of -26°C, and viscosity of 70, 29, and 3.8 centistokes at 0°, 37.8°, and 98.9°C, respectively. Both the fresh and aged adhesive compositions were evaluated. The results are shown in Table III, IV, and V.

TABLE III - Fresh Adhesives

| | Unthickened Opaque Ethyl Cyanoacrylate | Unthickened Clear Ethyl Cyanoacrylate (Control) |
|---|---|---|
| Viscosity | 3.68 | 3.38 |
| 2 min. Steel lap shears (psi) | 753 | 1640 |
| 15 min. Steel lap shears (psi) | 687 | 1767 |
| 24 hr. Steel lap shears (psi) | 2453 | 2460 |
| 2 hr. Gum rubber shears (psi) | 45 | 224 |
| 24 hr. Plastic shears (psi) | | |
| Acrylonitrile-butadiene-styrene | 920 ** | 933 ** |
| Polystyrene | 633 ** | 653 ** |
| Phenolic | 727 | 1100 ** |
| Polycarbonate | 1460 ** | 953 ** |
| Zytel Nylon | 321 | 152 ** |
| Set Times | | |
| Steel(sec.) | 15-20 | 10 |
| Phenolic(sec.) | 10-15 | 5 |
| Buna-N rubber(sec.) | 0-5 | 7 |

**Denotes substrate failure

TABLE IV - Adhesives Aged 5 days @ 70°C

| | Unthickened Opaque Ethyl Cyanoacrylate | Unthickened Clear Ethyl Cyanoacrylate (Control) |
|---|---|---|
| Viscosity (cps.) | 6.09 | 4.79 |
| 2 min. Steel shears (psi) | 487 | 1767 |
| 15 min. Steel shears (psi) | 1067 | 1653 |
| 24 hr. Steel shears (psi) | 2140 | 2153 |

TABLE V - Plastic Shears Aged 12 Days @ 70°C

| | Unthickened Opaque Ethyl Cyanoacrylate | Unthickened Clear Ethyl Cyanoacrylate (Control) |
|---|---|---|
| Acrylonitrile-butadiene-styrene (psi) | 920** | 933** |
| Polystyrene (psi) | 560** | 553** |
| Phenolic (psi) | 287 | 860** |
| Polycarbonate (psi) | 1040** | 1013** |
| Zytel nylon (psi) | 44 | 40 |

**Denotes substrate failure

The results show that, although being somewhat slower than the control cyanoacrylate adhesive, the opaque ethyl cyanoacrylate adhesive achieved the same strength on steel and most plastics. Lower strength was observed on both gum rubber and the phenolic. The opaque adhesive also showed good oven aging properties.

Example III

This example shows that, even with a thickened stabilized ethyl cyanoacrylate (80% ethyl cyanoacrylate having a viscosity of about 2000 cps. and 20% HB-40), there was little relative change in the adhesion properties when compared to the unthickened adhesive of Example II. The results are shown in Table VI.

TABLE VI

| | Thickened Opaque Ethyl Cyanoacrylate | Thickened Clear Ethyl Cyanoacrylate (Control) |
|---|---|---|
| Viscosity (cps.) | 1620 | 2090 |
| 2 min. Steel shears (psi) | 507 | 1380 |
| 15 min. Steel shears (psi) | 773 | 1650 |
| 24 hr. Steel shears (psi) | 1973 | 2225 |
| 2 hr. Gum rubber (psi) | 163 | 501** |
| Set Time (sec.) | | |
| Steel | 20 | 20 |
| Phenolic | 15 | 15 |
| Buna-N rubber | 23 | 20 |

** Denotes substrate failure

Example IV

This example shows the use of a high boiling solvent as the opacifier with methyl cyanoacrylate. The adhesive composition contained 80% unthickened methyl cyanoacrylate and 20% of a triethylene gycol di-2-ethylhexanoate (CAS Reg. No. 94-28-0), available as Kodaflex® TEG-EH from Eastman. The solubility parameter of the solvent, calculated using Small's molar attraction constants, was 8.5. It has a boiling point of 344°C and 219°C at 760 and 5 mm. Hg, a viscosity of 15.8 CP at 20°C, and a specific gravity of 0.967 at 20/20°C. The results are shown in Table VII.

TABLE VII

| | Unthickened Opaque Methyl Cyanoacrylate | Unthickened Clear Methyl Cyanoacrylate (Control) |
|---|---|---|
| Viscosity (cps.) | 3.71 | 3.52 |
| 2 min. Steel lap shears (psi) | 100 | 820 |
| 15 min. Steel lap shears (psi) | 413 | 1560 |
| 24 hr. Steel lap shears (psi) | 1640 | 2140 |
| 2 hr. Gum rubber (psi) | 27 | 104 |
| Set Times (sec.) | | |
| Steel | 35-40 | 20-25 |
| Phenolic | 5-10 | 5-10 |
| Buna-N | 5-10 sec. | 5-10 sec. |

The results show that the opaque adhesive was somewhat diminished in ultimate strength on steel, slower in strength development on steel, and had diminished gum rubber adhesion. Nevertheless, it was acceptable for application where the use of an opaque methyl cyanoacrylate is required.

EXAMPLE V

This example describes the preparation of an opaque colored cyanoacrylate. A total of 0.3% Resiren Red TFB dye, available from Mobay Chemical Corp., was added to the opaque unthickened, stabilized ethyl cyanoacrylate adhesive of Example II. The material turned opaque red upon cure. Its bonding properties were as follows:
2 min. Steel lap shear (psi) 725
15 min. Steel lap shear (psi) 730
24 hr. Steel lap shear (psi) 2416
2 hr. Gum rubber (psi) 62
The results show the formulation had reduced adhesive properties; however, it would be useful in various temporary bonding applications.

EXAMPLE VI

The opaque colored cyanoacrylate formulation of Example V was coated onto a piece of black buna-N rubber whose surface had been cleaned with acetone. After 24 hours, the rubber possessed a bright red coating that was plainly visible in even dim lighting conditions. A comparative colored cyanoacrylate formulation was made in a similar manner but a fully compatible plasticizer (i.e., dibutyl phthalate), was used in place of the semi-compatible plasticizer HB-40. The control formulation was coated in a piece of black buna-N in the same manner as above. It produced a non-opaque coating whose color was almost indiscernible. Only the cyanoacrylate formulation containing the semi-compatible plasticizer was suitable for color coding this material.

EXAMPLE VII

A black ferrite core was dipped into the colored cyanoacrylate formulation of Example V containing HB-40. The coated core was then dipped into a commercial cyanoacrylate accelerator (i.e., a solution of amines in a carrier solvent). The coating cured to handling in about 1 minute. Opacity began to develop after about 5 minutes, with full development varying between 6 and 24 hours. The final result was a 1/8" thick coating with a highly visible red color. When the same approach was attempted with the colored control formulation of Example VI (i.e, the formulation containing dibutyl phthalate), a non-opaque coating of barely discernible color was formed. Only the cyanoacrylate formulation containing the semi-compatible plasticizer was suitable for color coding this material.

**Claims**

1. A method for opacifying a cyanoacrylate composition, which comprises the step of adding to at least one monomeric 2-cyanoacrylate an effective amount of a semi-compatible plasticizer, the plasticizer being a solvent having a boiling point of 93°C (200°F) or above and selected from the group consisting of a non-hydrogen bonding solvent or a moderately hydrogen bonding solvent, the solvent being soluble in the monomeric 2-cyanoacrylate and insoluble in the polymerized 2-cyanoacrylate.

2. The method of Claim 1, wherein the monomeric cyanoacrylate is ethyl cyanoacrylate and the solvent is a non-hydrogen bonding solvent having a solubility parameter above 7.4 and below 8.9 or a moderately hydrogen bonding solvent having a solubility parameter of 7.4 to less than 8.4 or wherein the monomeric cyanoacrylate is methyl cyanoacrylate and the solvent is a non-hydrogen bonding solvent having a solubility parameter above 7.8 and below 11.1 or a moderately hydrogen bonding solvent having a solubility parameter of 7.4 to less than 9.6.

3. The method of Claim 2, wherein the monomeric cyanoacrylate is ethyl cyanoacrylate and the non-hydrogen bonding solvent has a solubility parameter of 7.8 to 8.7 and the moderately hydrogen bonding solvent has a solubility parameter of 7.4 to 8.4 or wherein the monomeric cyanoacrylate is methyl cyanoacrylate and the non-hydrogen bonding solvent is a partially hydrogenated terphenyl compound having a solubility parameter of about 8.7.

4. The method of Claim 3, wherein the monomeric cyanoacrylate is ethyl cyanoacrylate and the non-hydrogen bonding solvent is a partially hydrogenated terphenyl compound having a solubility parameter of 8.7 and the moderately hydrogen bonding solvent is selected from the group consisting of butyl stearate, dibutyoxyethyl phthalate, tributyl phosphate, 2-ethylhexyl diphenyl phosphate, and dioctyl azelate or wherein the monomeric cyanoacrylate is methyl cyanoacrylate and the moderately hydrogen bonding solvent is selected from the group consisting of butyl stearate, dibutyoxyethyl phthalate, tributyl phosphate, 2-ethylhexyl diphenyl phosphate, dioctyl azelate, dioctyl phthalate, dibutyl adipate, dihexyl phthalate, tricresyl phosphate, dibutyl sebacate, and triphenyl phosphate.

5. The method of Claim 3, wherein the monomeric cyanoacrylate is ethyl cyanoacrylate and the moderately hydrogen bonding solvent is triethylene glycol di-2-ethylhexanoate having a solubility parameter of about 8.5 and wherein the monomeric cyanoacrylate is methyl cyanoacrylate and the partially hydrogenated terphenyl compound has a boiling point of about 180°C at 10 mm. Hg.

6. A cyanoacrylate composition, which comprises at least one monomeric 2-cyanoacrylate and an effective amount of a semi-compatible plasticizer as an opacifier, the plasticizer being a solvent having a boiling point of 93°C (200°F) or above and selected from the group consisting of a non-hydrogen bonding solvent or a moderately hydrogen bonding solvent, the solvent being soluble in the monomeric 2-cyanoacrylate and insoluble in the polymerized 2-cyanoacrylate, thereby causing the polymerize cyanoacrylate to become opaque.

7. The composition of Claim 6, wherein the monomeric cyanoacrylate is a compound of the formula:

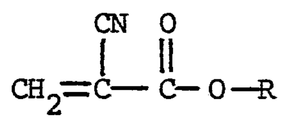

where R is a $C_{1-12}$ alkyl, $C_{1-12}$ alkyl substituted with a halogen atom or an alkoxy group, $C_{2-12}$ alkenyl, $C_{2-12}$ alkynyl, aralkyl or aryl and wherein the plasticizer is present in an amount of from 5% to 50% by weight, based on the weight of the monomeric 2-cyanoacrylate.

8. The composition of Claim 7, wherein the monomeric cyanoacrylate is ethyl cyanoacrylate or methyl cyanoacrylate the plasticizer is present in an amount of from 20% to 30%.

9. The composite article comprising at least two non-porous substrates adhered together by an in situ polymerized layer of the composition of Claim 6.

10. A coated article comprising a non-porous substrate coated by an in situ polymerized layer of the composition of Claim 6.